# EUROPEAN PATENT APPLICATION

(11) **EP 2 355 241 A1**
(43) Date of publication of application: **10.08.2011**
(21) Application number: 10152347.0
(22) Date of filing: 02.02.2010
(51) Int. Cl.: H01Q 1/24, H01Q 1/52, H01Q 5/00, H01Q 9/04, H01Q 21/28, H01Q 21/30

(54) **An antenna device for a radio communication device**

(71) Applicant: Laird Technologies AB, 164 22 Kista (SE)
(72) Inventor: Arbin, Axel von, SE-183 63, TÄBY (SE); Palin, Ulf, SE-184 97, LJUSTERÖ (SE); Erlandsson, Per, SE-117 34, STOCKHOLM (SE)
(74) Representative: Romedahl, Bengt

(57) **Abstract**

The present invention relates to an antenna device for a portable radio communication device. The antenna device comprises a metal front side part (3), a first metal back side part (1) electrically connected to the front side part through a metal top side part (4), a second metal back side part (2) electrically connected to the front side part through a metal bottom side part (5), wherein the bottom and top side parts are positioned at opposite ends of the front side part, and the first and second back side parts are positioned essentially coplanar and distanced from each other by a slot, and the front side part electromagnetically screens the antenna device from a display means (37) of the portable radio communication device.

## Description

### FIELD OF INVENTION

The present invention relates generally to antenna devices for radio communication devices, and particularly to antenna devices for portable radio communication devices.

### BACKGROUND

A current trend for portable radio communication devices, such as mobile phones, PDA, portable computers and similar devices, is to provide the device with a metal cover. A metal cover for a portable radio communication device makes it difficult to provide the device with a non-protruding antenna, as the metal cover shields the inner of the device for radio frequencies. It is possible to only partly provide the cover as a metal cover, to allow the use of a built in antenna, but it would be desirable to provide a full metal cover.

Another trend for portable radio communication devices, such as mobile phones and similar devices, is to provide the device with a very broadband coverage, covering e.g. GSM850, GSM900, GSM1800, GSM1900, UMTS 2100 MHz, LTE, GPS, BT and WLAN 2.4 GHz. This puts further restrictions on the design of an antenna for a portable radio communication device.

### SUMMARY OF THE INVENTION

An object of the present invention is to provide an antenna device for a portable radio communication device having a metal cover.

This object, among others, is according to the present invention attained by an antenna device and a portable radio communication device, respectively, as defined by the appended claims.

By providing an antenna device for a portable radio communication device, wherein the antenna device comprises a metal front side part, a first metal back side part electrically connected to the front side part through a metal top side part, a second metal back side part electrically connected to the front side part through a metal bottom side part, wherein the bottom and top side parts are positioned at opposite ends of the front side part, and the first and second back side parts are positioned essentially coplanar and distanced from each other by a slot, and the front side part electromagnetically screens the antenna device from a display means of the portable radio communication device a broad band antenna having a directed radiation pattern can be provided allowing application of a plurality of e.g. mobile phone models to the antenna device.

An advantageous utilization of the antenna module directivity is to preferably provide sliding means on said front side part for attachment of the antenna device to a display means of a slider phone.

A feed point is preferably positioned on the first back side part near the middle of the slot to facilitate providing the broad frequency band. A ground point on the first back side part is further preferably positioned near a corner of the top side part, to tune the frequency band coverage.

The second back side part preferably comprises a ground point at the slot and the second back side part is fed parasitically from the feed point on the first back side part.

For changed visual appearance of the portable radio communication device the metal cover is preferably arranged on the inside of a visual coating of the portable radio communication device.

Available space inside the antenna device advantageously comprises an audio resonant cavity within the metal cover, preferably two audibly equivalent resonant cavities for providing stereo sound.

Due to the configuration of the antenna device the front side part can preferably be provided with four metal corners connected to the first and second back side parts, respectively, at least covering 2 mm on the side edge and top and bottom side parts, respectively. Hereby improved wear resistance is achieved.

Electrical connection between the first back side part and the front side part through the top side part preferably comprises a plurality of conductive connectors for well defined grounding of the first back side part. Electrical connection between the second back side part and the front side part through the bottom side part preferably comprises a plurality of conductive connectors for well defined grounding of the second back side part.

Advantageously the front side part and at least a major portion of the top and bottom side parts are made of forged metal, and the first and second back side parts are preferably made of stamped metal.

For e.g. improved antenna efficiency the stamped metal at least partly is coated with an oxidation and/or wear resistant conductor such as copper, silver, titanium, gold or an alloy thereof.

For improved RF screening and utilization of available space the front side part preferably comprises a printed wiring board arranged in an opening in the front side part, and wherein the printed wiring board is RF sealed to the front side part, preferably by means of a conductive gasket.

For an efficient way of screening a display having a RF unshielded cable, the antenna device comprises a printed wiring board positioned over an opening in the front side part, and the antenna device comprises a conductive gasket arranged between the printed wiring board and the front side part to electromagnetically screen the RF unshielded cable from the first and second back side parts.

A portable radio communication device, such as a mobile phone, is foreseen comprising an antenna device as described above.

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Fig. 1 schematically shows a side elevation view of a metal cover for a mobile phone according to an embodiment of the present invention.
Fig. 2 schematically shows a back side view of a metal cover provided with feeding and grounding lines.
Fig. 3 schematically shows a front view the metal cover shown in Fig. 2.
Fig. 4 schematically shows a variant of the metal cover shown in Fig. 1.
Fig. 5 schematically shows a ground connection between a front side part and a back side part of a metal cover for a mobile phone according to the present invention.
Fig. 6 shows a blown up portion of Fig. 5, more clearly illustrating oriented wires.
Fig. 7 schematically shows an alternative ground connection between a front side part and a back side part of a metal cover for a mobile phone according to the present invention.
Fig. 8 schematically shows yet an alternative ground connection between a front side part and a back side part of a metal cover for a mobile phone according to the present invention.
Fig. 9 schematically shows a touch screen connection cable connection positioned in a screening box.
Fig. 10 shows a blown up portion of Fig. 9.
Fig. 11 schematically shows a metal cover without a cavity for a battery.
Fig. 12 schematically shows a metal cover with a cavity for partial accommodation of a battery.
Fig. 13 schematically shows a slider phone.
Fig. 14 schematically shows an alternative slider phone.
Fig. 15 schematically shows alternative positions for feed points.
Fig. 16 schematically shows yet alternative positions for feed points.
Fig. 17 schematically shows a metal cover having a single feed point for feeding both high band portion and low band portion of the metal cover.
Fig. 18 schematically shows positioning of a battery spread out over both the high band portion as well as the low band portion.
Fig. 19 schematically shows front cover adjustment for partial accommodation of a battery.
Fig. 20 schematically shows practical available space for metallic features inside the metal cover.
Fig. 21 schematically shows mathematical available space for metallic features inside the metal cover.
Fig. 22 schematically shows material size of a metal corner of a metal cover for a mobile phone.
Fig. 23 shows a matching net for a common feed point of the antenna device.

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

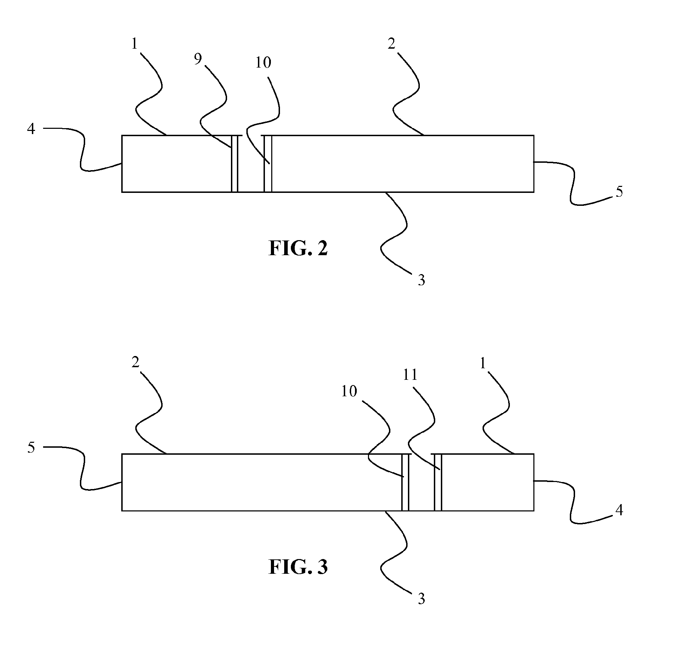

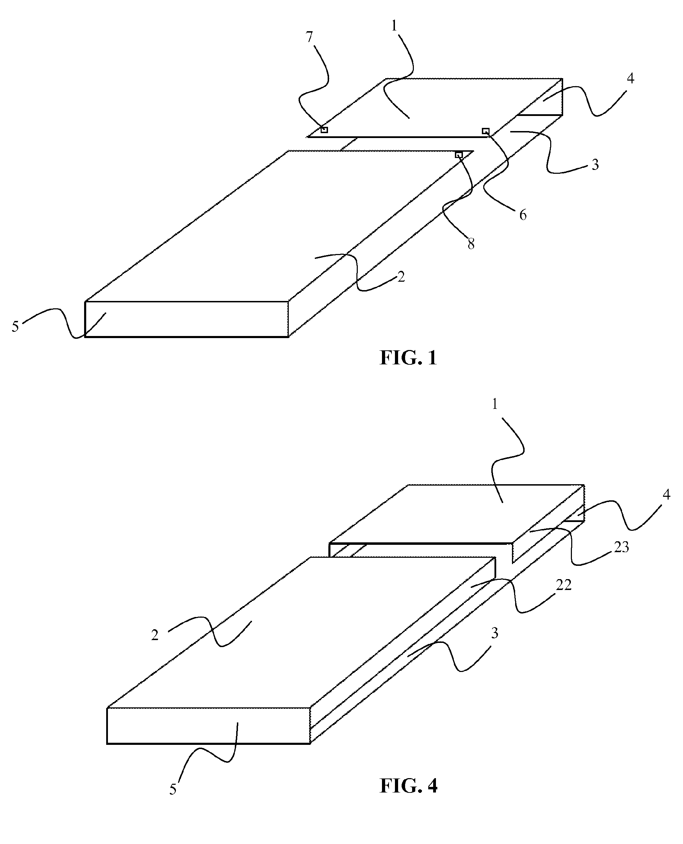

An antenna device for a portable radio communication device according to a first embodiment of the present invention will now be described with reference to Figs. 1-3.

The antenna device comprises a metal cover for the portable radio communication device, here described as a mobile phone. The back side of the metal cover, arranged in the back side of the mobile phone, is divided into two parts. A first back side part 1 is connected to the front side part 3 of the metal cover through a top side part 4. A second back side part 2 is connected to the front side part 3 of the metal cover through a bottom side part 5. The first back side part 1 and the second back side part 2 are essentially coplanar and distanced from each other by a slot of about 2-5 mm, preferably 3 mm. The first and second back side parts should be coplanar at least along the slot, through which they interact with each other.

The first back side part 1 is driven as a multi-band antenna element by being fed at a feed point 6 at a corner near the slot against the second back side part 2, by being grounded at a ground point 7 at an opposite corner near the slot against the second back side part, and by being grounded along the top side part 4. For a mobile phone, and thus its metal cover, having a length of about 110 mm, a width of about 65 mm, and a thickness of about 5 mm, a frequency band coverage of about 1550-2500 MHz is achievable. The first back side part 1 has a generally rectangular shape having a length of about 35 mm and a width of about 65 mm, in this example.

The second back side part 2 is driven as an antenna element by being fed at a feed point 8 at a corner near the slot against the first back side part 1, and by being grounded along the bottom side part 5. For a mobile phone, and thus its metal cover, having a length of about 110 mm, a width of about 65 mm, and a thickness of about 5 mm, a frequency band coverage of about 750-1050 MHz is achievable. The second back side part 2 has a generally rectangular shape having a length of about 72 mm and a width of about 65 mm, in this example.

The first 1 and second 2 back side parts are functioning as radiating elements over a ground plane, i.e. over the front side part 3. For a portable radio communication device, a very broad band antenna having a much directed radiation pattern, directed from the front side part backwards through the slot, is achieved by having the first and second back side parts, respectively, connected to the front side part through the top and bottom grounding means, wherein the front side part is a large ground plane. A combination of the length and width of the second back side part provides for the bandwidth of the low-band operation. If the length or width is increased the lowest frequency of the low-band operation is reduced, and if the length or width is decreased the lowest frequency of the low-band operation is increased. If the width of the slot is reduced the high-band operation is tuned down, and if the length of the slot is reduced the high-band operation is tuned up. If the length of the first back side part is reduced the high-band operation is tuned up.

The slot is illustrated as a straight slot between two planar parts. The slot, and the two planar parts, can however have different shapes, such as being slightly curved in the length direction and/or in the width direction. Also, the slot need not be completely straight, but can comprise variations along its length, as long as the width of the slot is kept essentially constant.

A display device and/or a key pad are typically provided with grounded shielding means, through the front side part. The grounded shielding means then form part of the front side part. Further, in a mobile phone e.g. having a touch screen occupying essentially the whole front thereof, the front side part of the metal cover will then be made up by the shielding means of the touch screen.

The first and second back side parts have been described as having feed points 6 and 8, respectively. Feeding of the feed points 6 and 8 is advantageously provided as two separate feedings 11 and 10 through two separate ports to RF circuitry, to improve isolation there between, but the feeding of the feed points 6 and 8 could alternatively be provided through a common port having filtering means to separate signaling to and from RF circuitry. The ground point 7 is fed through feeding 9.

The second back side part 2 preferably covers the whole battery of the mobile phone. The second back side part is preferably pivotable around and/or detachably attached to the bottom side part to facilitate access into the mobile phone for e.g. changing battery or for changing a SIM of the mobile phone.

For improved antenna function the metal cover is preferably made up by or metalized by a good conductive material. The front side part and major portions of the top side and bottom side parts are preferably manufactured as an integral forged metal part. The forged metal is e.g. made up by an aluminum alloy, stainless steel, nickel/brass, or magnesium. The back side parts are preferably manufactured by a stamped sheet metal, e.g. an aluminum alloy, possible coated (typically 3-5 µm) with an oxidation and wear resistant conductor such as e.g. copper, silver, gold, titanium or alloys thereof. Such a coating can also be used as masking when an anodizing process is performed for e.g. coloring and/or surface finish treatment of the metal.

For other appearances of the mobile phone, such as a plastic, wood or leather appearance, the inside of such a outer contour can be coated on the inside with metallization through e.g. PVD, electro less plating, adhesive, forging painting, spraying or laminating. By stacking materials with different properties and characteristics, such as high dielectric materials, low loss materials, high conductive materials, RF transparent materials, optically transparent materials, high wear resistance and good corrosion resistance, certain parameters can be optimized and thereby enhance the performance. The stacked material can either cover the entire area or be made selectively. One example could be to add a layer of a low loss material between the radiating structure and the mechanical carrier in order to enhance the antenna performance. With such a solution it is possible to add additional antenna radiators in non-sensitive areas of the first and second back side parts, i.e. near well grounded areas such as near the top and bottom side parts.

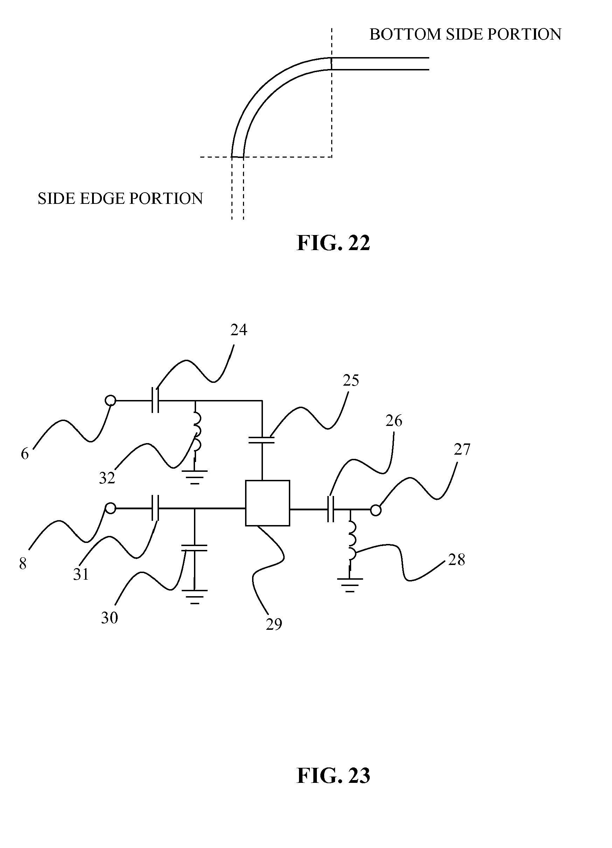

The corners of the metal cover are preferably rounded between the top side part and the side edge parts, as well as between the bottom side part and the side edge parts. The forged front side part can be designed with different material thickness at different areas and thereby be optimized from mechanical robustness, cost and weight/volume perspective. More material in corners that are subjected to higher mechanical impact and wearing gives a more robust and less sensitive product. The shape of a corner is illustrated in Fig. 22. The thickness of the material is today limited to be at least 0.3 mm when being forged, but preferably has a thickness of about 0.8 mm for structural strength and wear resistance. By providing the whole curvature of the corner in forged metal the most wear exposed parts of a mobile phone is provided with a very wear resistant metal part, and it facilitates design of mobile phones having very thin forms.

The parts of the antenna device not of metal, such as e.g. the slot and side edges, can be provided with plastic or other RF transparent material. These areas can be made visually looking like metal by using a RF transparent PVD coating technique, applying a layer of about 0.1-1 nm metall. Such a layer is typically protected by a layer of varnish. Also the metallic parts of the antenna device are typically protected by a layer of varnish and/or is treated to prevent oxidization thereof.

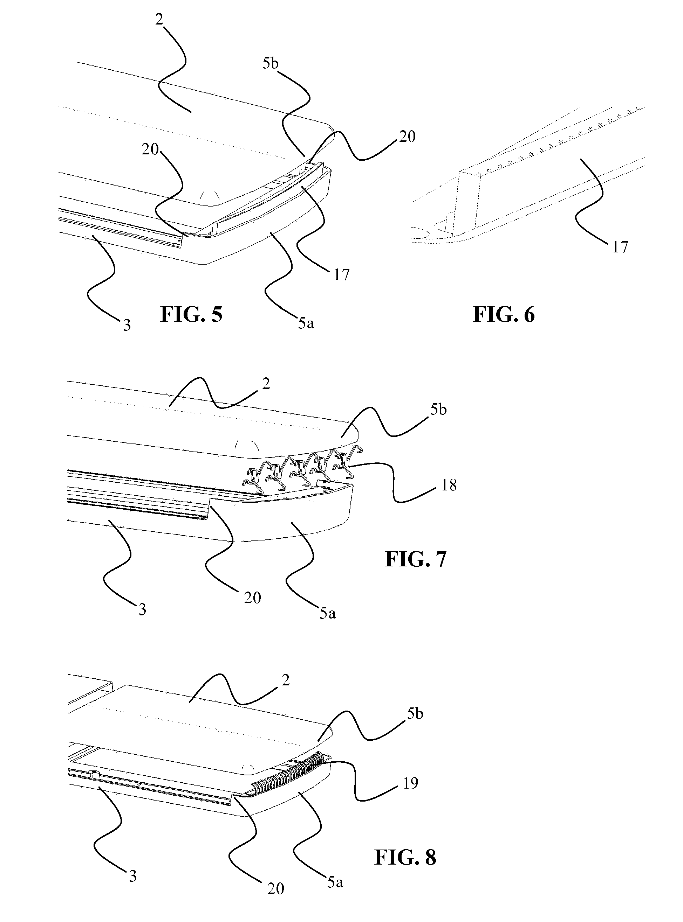

The top and bottom side parts have been illustrated as parts electrically covering the top and bottom side, respectively, of the portable radio communication device, but can alternatively comprise a plurality of grounding portions together not completely electrically covering the top or bottom side, respectively. Such connections can e.g. be provided by means of spring loaded connectors. The electrical coverage of the top and bottom sides are preferably dense, to prevent too much leakage of RF energy causing antenna efficiency loss. Alternative solutions are illustrated in Figs. 5-8.

Fig. 5 illustrates how a contact means 17, in this case a conductive gasket, preferably an oriented wire gasket, is used to provide electrical connection between the second back side part 2 and the front side part 1. In this case the bottom side part 5 is divided in parts 5a and 5b, such that both the second back side part as well as the front side parts comprises bent edges, to improve their structural rigidity. In Fig. 6 the contact means 17 of Fig. 5 is illustrated blown up, to show the oriented conductive wires in an oriented wire gasket. In case the contact means 17 does not provide electrical connection around the corners of the metal cover, additional contact means such as e.g. spring loaded connectors are arranged at the outer end of the corners 20 to provide well defined grounding positions. For a well defined ending of the corners the grounding should be provided until the beginning of the opening at the side edge of the metal cover. A similar connection means can also be provided at the top side part of the metal cover.

Fig. 7 illustrates how the contact means 18, in this case a plurality of contact clips are used to provide electrical connection between the second back side part 2 and the front side part 1. In this case the bottom side part 5 is divided in parts 5a and 5b, such that both the second back side part as well as the front side parts comprises bent edges, to improve their structural rigidity. In case the contact means 17 does not provide electrical connection around the corners of the metal cover, additional contact means such as e.g. spring loaded connectors are arranged at the outer end of the corners 20 to provide well defined grounding positions. For a well defined ending of the corners the grounding should be provided until the beginning of the opening at the side edge of the metal cover. A similar connection means can also be provided at the top side part of the metal cover.

Fig. 8 illustrates how the contact means 19, in this case an integrated spring leaf is used to provide electrical connection between the second back side part 2 and the front side part 1. In this case the bottom side part 5 is divided in parts 5a and 5b, such that both the second back side part as well as the front side parts comprises bent edges, to improve their structural rigidity. In case the contact means 17 does not provide electrical connection around the corners of the metal cover, additional contact means such as e.g. spring loaded connectors are arranged at the outer end of the corners 20 to provide well defined grounding positions. For a well defined ending of the corners the grounding should be provided until the beginning of the opening at the side edge of the metal cover. A similar connection means can also be provided at the top side part of the metal cover.

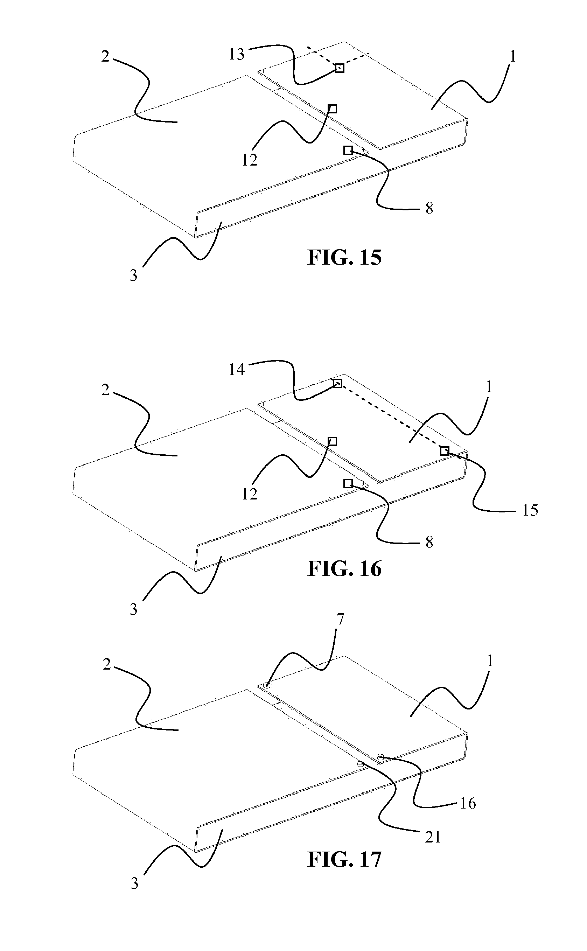

For tuning of the antenna device made up by the metal cover additional grounding points can be added at the sides of the portable radio communication device. However, tuning of the antenna device is preferably provided by selecting alternative positions for the feed and ground points, which is illustrated in Figs. 15-17.

The first back side part 1, being fed as the high-band part of the antenna device, preferably has the feed point 12 positioned close to the middle of the slot between the first back side part and the second back side part, about 30 mm from the side edge of the metal cover of its 65 mm width. The ground point 13, additional to the grounding at the top edge of the metal cover, of the high-band part of antenna device preferably is positioned a little distance from the grounded corner, as illustrated in Fig. 15. In this way the area marked by dashed lines is very well grounded and the corresponding volume of the antenna device can be utilized for essentially any other purpose than antenna function without disturbing the desired antenna function of the antenna device. By selecting the feed point 12 position close to the middle of the slot, low-band overtones from the second back side part is cut away and the coupling between the low band and high band is reduced.

Alternatively the first back side part 1, being fed as the high-band part of the antenna device, preferably has the feed point 12 positioned close to the middle of the slot between the first back side part and the second back side part, about 30 mm from the side edge of the metal cover of its 65 mm width. Two additional ground points 14 and 15, of the high-band part of antenna device, is preferably positioned along the sides of the first back side parts a little distance from the grounded corners, as illustrated in Fig. 16. In this way the area marked by the dashed line is very well grounded and the corresponding volume of the antenna device can be utilized for essentially any other purpose than antenna function without disturbing the desired antenna function of the antenna device, such as e.g. a rounded or elliptical shape of the top side of the mobile phone. Further, electrical length of the first back side part is shortened, which can be utilized for tuning of the antenna device.

Yet alternatively the antenna device is fed with a single common feed 16 arranged on the first back side part, for both the high-band part as well as the low-band part, as illustrated in Fig. 17. The single common feed could either be connected through two ports for connection to RF circuitry or through a single common port for connection to the RF circuitry. The first back side part 1 is configured for providing resonance for the high-band part of the antenna device, and the second back side part 2 is configured for providing resonance for the low-band part of the antenna device being fed as a parasitic element. The controllable solution enables broader frequency coverage. The first back side portion comprises a grounding point 7 at the slot, opposite the feed point 16. The second back side part comprises a ground point 21 at the slot, adjacent the feed point 16. This embodiment can also be combined with other feed point positions as described with reference to Figs. 15 and 16.

A matching net for two feed points 6 and 8 connected through a common port is illustrated in Fig. 23. Capacitor 24 has a capacitance of about 1 pF, capacitor 25 has a capacitance of about 100 pF, capacitor 26 has a capacitance of about 100 pF, capacitor 30 has a capacitance of about 1 pF, capacitor 31 has a capacitance of about 2 pF, inductor 28 has an inductance of about 12 nH, and inductor 28 has an inductance of about 10 nH. Switch 29 selects between connecting feed point 8 or feed point 6 to common RF port 27. It is also possible to exchange the switch with a diplex filter.

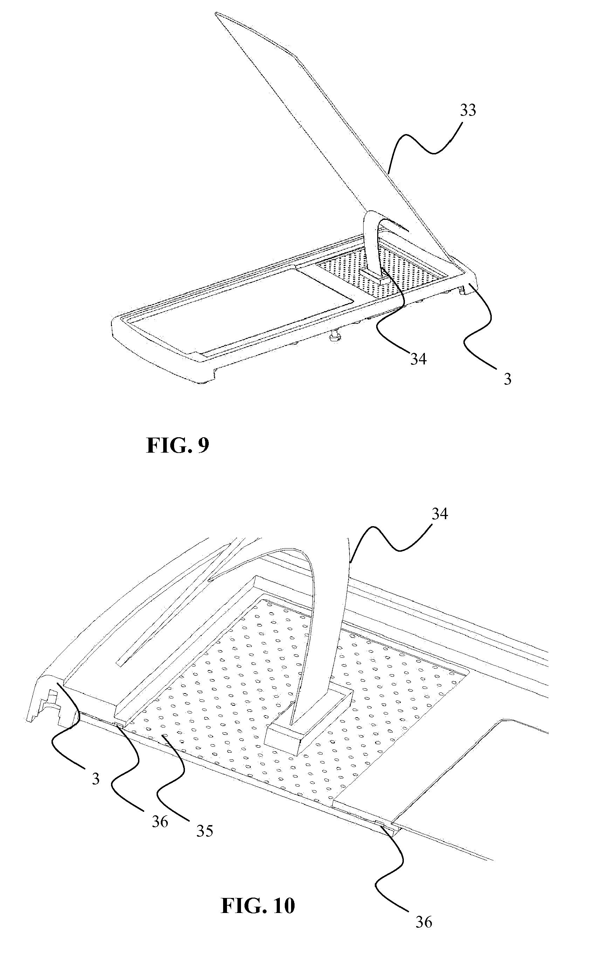

The front side part 3 of the antenna device is preferably provided with a printed wiring board 35 (PWB), e.g. the main PWB of the mobile phone, which is illustrated in Figs. 9 and 10. Generally, a FPC 34 (Flexible Printed Circuit) and LIF/ZIF connectors are used for connecting the display 33 to the PWB. One problem is that the current flowing on the FPC often disturbs electronic components, particularly the RF circuitry. To efficiently electromagnetically screen the FPC from e.g. the RF circuitry a conductive gasket 36 is arranged between the front cover 36 (around opening) and PWB 35 prevents RF leakage to the opposite side where the main parts of the components are located.

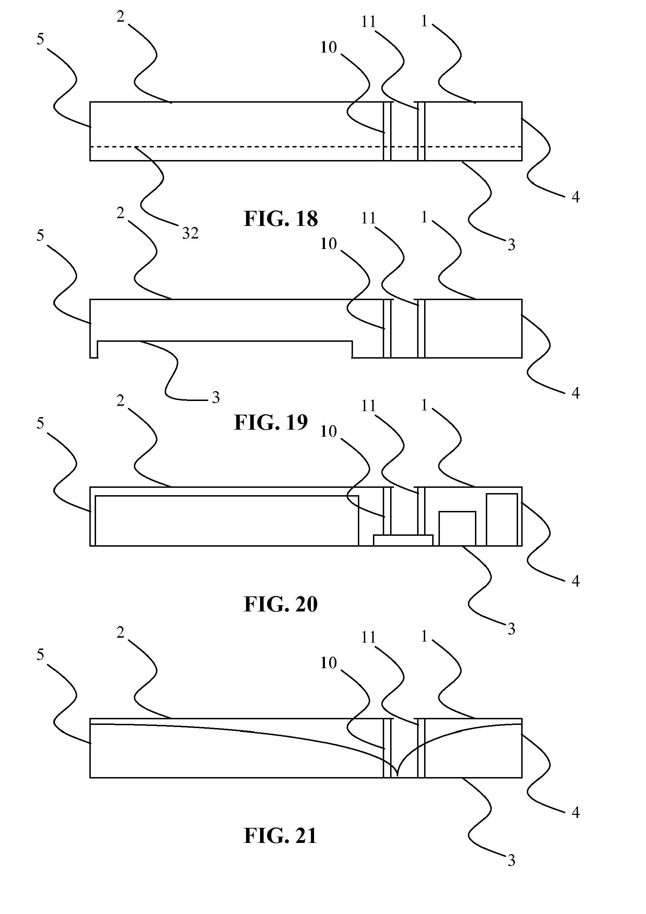

The inner volume of the antenna device, i.e. between the first and second back side parts, the front side part, the top side part and the bottom side part, can be utilized for different things. For non-metallic, or at least for nonconductive materials, essentially any part of the inner volume can be utilized. For conductive materials, affecting the antenna function, certain parts of the inner volume is not available for utilization. The antenna device will require a spacing of about 2 mm from the second back side part to a high-performance battery, typically requiring a height of about 5 mm, for a mobile phone, and it can today typically not be provided in the inner volume below the second back side part 68x65x5 mm³, with the available space of 68x65x3 mm³. However, due to the form of the antenna device it should be possible to accommodate a high-performance battery for a mobile phone spread out over essentially the whole front side part, in such a case requiring a height 32 of about 2 mm, which is illustrated in Fig. 18. Such a spread out battery can utilize a volume of 110x65x2 mm³.

To utilize available space below the second back side part the front side part 3 is preferably profiled to reduce that space, as illustrated in Fig. 19.

Generally the available inner volume of the antenna device can be divided into different areas allowing more or less available volume, which is illustrated in Fig. 20. Below the second back side part, or low-band part, a distance of about 2 mm is required for adequate antenna performance. Below the slot a distance of about 5 mm is required for adequate antenna performance, essentially leaving no available volume there, and preferably also near the slot. The portion of the first back side part nearest the slot a distance of about 3 mm is required for adequate antenna performance. The portion of the first back side part nearest the top side part a distance of about 1 mm is required for adequate antenna performance. A more mathematical description of available space is illustrated in Fig. 21.

The available inner volume, or parts thereof, can advantageously be utilized for audio purposes, since resonance cavities need not be made electrically conductive. The inner volume is large enough for providing very deep resonances, regarding mobile phones, but advantageously two similar volumes are preferably provided to be able to provide stereo speakers with similar characteristics.

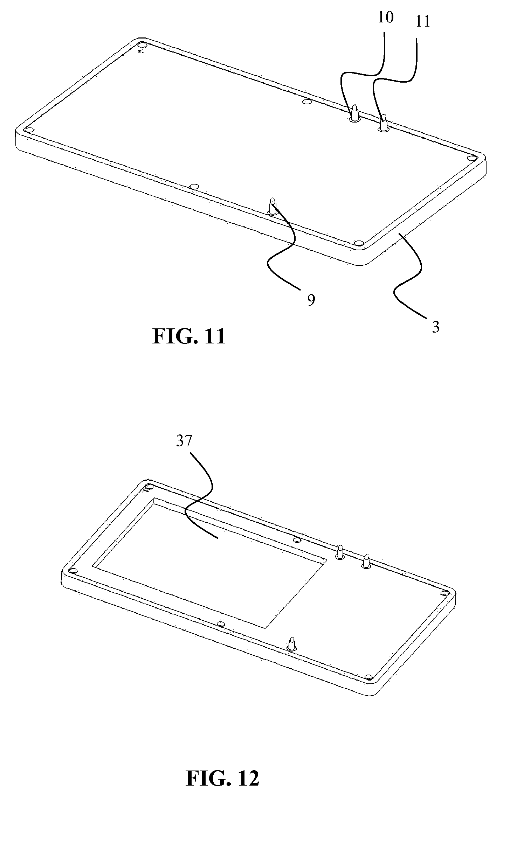

Due to the design of the antenna device it is advantageously used as an antenna module attachable to a plurality of different mobile phone models. By being very broad banded, having a very directed radiation pattern directed away from the front side part through the slot, and being very well screened through the front side part, the antenna device is very little affected of is attached to the front side part, facing away from the back side. Further, by making the front side part from forged metal, its form will be flexible in terms of e.g. differential height and it will have good structural strength. The antenna module is preferably attached to a mobile phone through screw fastening or snap fitting. In Fig. 11 a metal cover comprising antenna function, contact means 9-11, ground plane means 3, details 39 for fastening the antenna module to a mobile phone module is illustrated. In Fig. 12 a similar antenna module is illustrated, wherein the ground plane means 3 is shaped having a cavity for receiving a battery, at least partly.

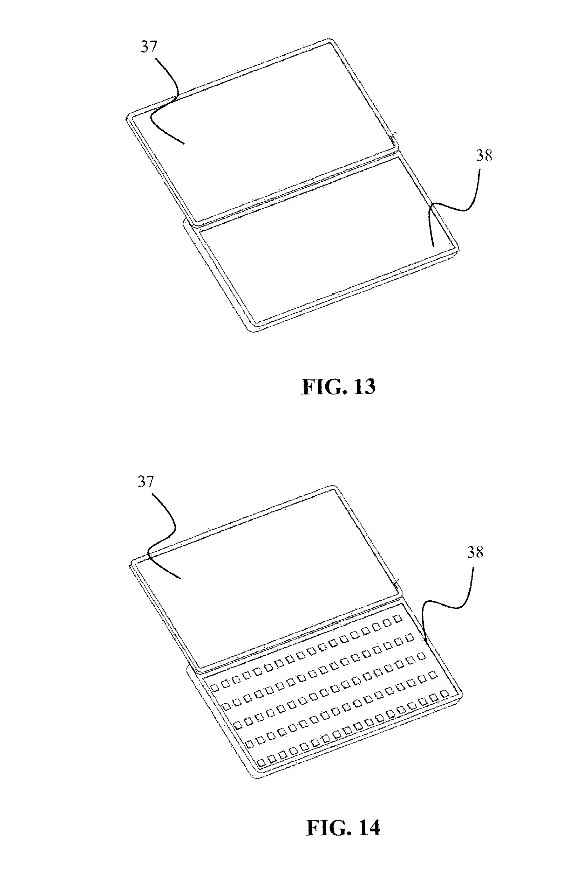

Advantageously, the module is provided with sliding means on the front side part, making it possible to attach the antenna device to a slider mobile phone, wherein the revealable part 38 of the slider phone is partly accommodated in the front side part of the antenna module, and the front 37 of the slider phone is facing away from the antenna device. Such a slider phone is illustrated in Fig. 13 having a touch screen display in both outer facing parts 37 and 38. Another such slider phone is illustrated in Fig. 14 having a tough screen display in the outmost part 38 and a qwerty board in the revealed part 38.

Although the first back side part has been described as generating the high frequency band and the second back side part has been describe as generating the low frequency band, the opposite is also possible. Also, either the first or the second back side part could generate both low and high frequency bands.

Additional tuning of the antenna device will be described with reference to Fig. 4. The first back side part 1 and the second back side part 2 comprises folded side edge portions 23 and 22 extending towards the front side part, extending about 3 mm and thus leaving a slot of about 2 mm to the front side part 3. Although the folded side edge portions have been illustrated as extending along the whole first and second back side parts, it is also possible to only have portions of the first and second back side part edges folded towards the front side part.

It will be obvious that the present invention may be varied in a plurality of ways. Such variations are not to be regarded as departure from the scope of the present invention. All such variations as would be obvious for a person skilled in the art are intended to be included within the scope of the present invention as defined by the appended claims.

## Claims

1. An antenna device for a portable radio communication device, **characterized in that** said antenna device comprises
a metal front side part (3),
a first metal back side part (1) electrically connected to said front side part through a metal top side part (4),
a second metal back side part (2) electrically connected to said front side part through a metal bottom side part (5),
wherein said bottom and top side parts are positioned at opposite ends of said front side part, and said first and second back side parts are positioned essentially coplanar and distanced from each other by a slot, and said front side part electromagnetically screens said antenna device from a display means (37) of said portable radio communication device.

2. An antenna device according to claim 1, wherein said second back side part comprises a ground point (21) and said second back side part is fed parasitically from said feed point on said first back side part.

3. An antenna device according to claim 1 or 2, wherein said feed point (6; 12; 16) is positioned at said slot, preferably near the middle of said slot.

4. An antenna device according to any of claims 1-3, wherein said metal cover is arranged on the inside of a visual coating of said portable radio communication device.

5. An antenna device according to any of claims 1-4, comprising an audio resonant cavity within said metal cover, preferably two audibly equivalent resonant cavities.

6. An antenna device according to any of claims 1-5, wherein said front side part comprises four metal corners connected to said first and second back side parts, respectively, at least covering 2 mm on the side edge and top and bottom side parts, respectively.

7. An antenna device according to any of claims 1-6, wherein said top side part comprises a plurality of conductive connectors electrically connecting said first back side part and said front side part.

8. An antenna device according to any of claims 1-7, wherein said bottom side part comprises a plurality of conductive connectors electrically connecting said second back side part and said front side part.

9. An antenna device according to any of claims 1-7, wherein said front side part and at least a major portion of said top and bottom side parts are made of forged metal.

10. An antenna device according to claim 9, wherein said first and second back side parts are made of stamped metal.

11. An antenna device according to claim 10, wherein said stamped metal at least partly is coated with a oxidation and/or wear resistant conductor such as copper, silver or gold.

12. An antenna device according to any of claims 1-11, wherein said front side part comprises a printed wiring board arranged in an opening in said front side part, and wherein said printed wiring board is RF sealed to said front side part, preferably by means of a conductive gasket.

13. An antenna device according to claim 12, wherein said portable radio communication device comprises a display having a RF unshielded cable, said antenna device comprises a printed wiring board positioned over an opening in said front side part, and said antenna device comprises a conductive gasket arranged between said printed wiring board and said front side part to electromagnetically screen said RF unshielded cable from said first and second back side parts.

14. An antenna device according to any of claims 1-13, comprising sliding means on said front side part for attachment of said antenna device to a display means of a slider phone.

15. A portable radio communication device comprising an antenna device according to any previous claim.
